# EUROPÄISCHE PATENTSCHRIFT

(11) **EP 3 646 701 B1**
(45) Veröffentlichungstag und Bekanntmachung des Hinweises auf die Patenterteilung: **29.05.2024**
(21) Anmeldenummer: 19203866.9
(22) Anmeldetag: 17.10.2019
(51) Int. Cl.: A01D 41/14, A01D 57/20

(54) **MÄHDRESCHER MIT EINER ANORDNUNG ZUR STEUERUNG DES BETRIEBS EINES BANDSCHNEIDWERKS**
COMBINE HARVESTER WITH AN ARRANGEMENT FOR CONTROLLING THE OPERATION OF A BELT HEADER
MOISSONNEUSE-BATTEUSE AVEC UN AGENCEMENT DE COMMANDE DU FONCTIONNEMENT D'UNE TÊTE DE RÉCOLTE À TAPIS

(30) Priorität: 29.10.2018 DE 102018218442
(43) Veröffentlichungstag der Anmeldung: 06.05.2020
(73) Patentinhaber: Deere & Company, Moline, IL 61265 (US)
(72) Erfinder: Bueermann, Martin, 68163 Mannheim (DE)
(74) Vertreter: Holst, Sönke

(56) Entgegenhaltungen:
- EP-A1- 1 419 688
- WO-A1-2012/166947
- US-B2- 8 186 136

## Beschreibung

Die Erfindung betrifft einen Mähdrescher mit einem Bandschneidwerk und einer Anordnung zur Steuerung des Betriebs des Bandschneidwerks, wobei das Bandschneidwerk mit einem mittleren Bandförderer und zwei äußeren Bandförderern ausgestattet und an einem mittels eines Aktors höhensteuerbaren und aushebbaren Schrägförderer des Mähdreschers angebracht ist.

### Stand der Technik

Bei der Getreideernte werden üblicherweise Schneidwerke verwendet, bei denen das Erntegut durch eine Haspel erfasst und nach hinten gefördert wird, damit es durch einen Messerbalken von den im Boden verbleibenden Wurzeln abgeschnitten werden kann. Der Querfördervorgang des abgeschnittenen Ernteguts erfolgt bei einer Art von Schneidwerken durch eine Querförderschnecke, in deren Mittelbereich Abgabeförderer in Form von gesteuerten Fingern vorgesehen sind, um das Erntegut in den Schrägförderer eines Mähdreschers zu transferieren. Die Querförderschnecke wird bei einer anderen Art von Schneidwerken, die als Bandschneidwerke (engl.: "draper belt header") bezeichnet werden, durch äußere Förderbänder ersetzt, die das abgeschnittene Erntegut oberschlächtig zur Mitte des Schneidwerks fördern, wo es durch ein mittleres Förderband nach hinten zur Abgabeöffnung des Schneidwerks gefördert wird und dort in den Schrägförderer gelangt. Oberhalb der Abgabeöffnung kann eine mit Fingern ausgestattete Fördertrommel angeordnet sein (vgl. DE 10 2013 206 515 A1).

Der mittlere Bandförderer arbeitet ebenfalls oberschlächtig. An seiner Unterseite ist eine Wanne angeordnet, die verhindern soll, dass in den Innenraum des Bandförderers und an seine Unterseite gelangendes Erntegut auf das Feld fällt. In dieser Wanne sammeln sich beim Erntevorgang somit nach und nach Mengen an Erntegut an, die auch beträchtliche Mengen an Korn enthalten. Der mittlere Bandförderer gibt dieses Erntegut im Erntebetrieb kontinuierlich nach vorn ab. Dieses vom mittleren Bandförderer nach vorn abgegebene Erntegut wird, solange noch Erntegut von vorn einläuft, durch das von vorn einlaufende Erntegut mitgenommen und gelangt wieder auf den mittleren Bandförderer und wird schließlich in den Schrägförderer eingezogen. Wird das Schneidwerk am Vorgewende jedoch ausgehoben, entfällt das von vorn einlaufende Material, was dazu führt, dass der mittlere Bandförderer ein Teil des angesammelten Ernteguts nach vorn abgibt und es auf den Erdboden fällt. Dadurch entstehen einerseits unerwünschte Kornverluste, andererseits hat man unerwünschten Kornaufgang am Feldende.

Ein an sich bekanntes Reversieren aller Bandförderer eines Bandschneidwerks auf eine Bedienereingabe hin (US 8 186 136 B2, US 201 8/0104937 A1) ist zwar an sich bekannt, für einen Bediener aber umständlich und kann, da kein Weiterbetrieb des Schrägförderers in der normalen Förderrichtung (sondern ebenfalls ein Reversieren) vorgesehen ist, allenfalls dazu führen, dass das unterhalb des mittleren Förderbands angesammelte Material auf das Feld ausgeworfen wird, was das beschriebene Problem nicht löst.

Die EP 1 419 688 A1 beschreibt ein Maisgebiss zur Ganzpflanzenernte zur Verwendung mit einem Feldhäcksler, das beim Ausheben selbsttätig sofort oder nach einer eingebbaren Zeitverzögerung reversiert wird, um an den auswärts weisenden, zum Abschneiden und Abfördern des Ernteguts dienenden Förder- und Führungselementen eines Endlosförderers hängende Maisblätter abzuwerfen. Hier geht es somit darum, die Schneid- und Förderelemente des Endlosförderers, an denen die Pflanzenteile hängenbleiben, durch Reversieren von den Blättern zu befreien.

In der EP 1 576 870 A1 wird vorgeschlagen, einen Erntevorsatz und einen Einzugsförderer einer Erntemaschine im Vorgewende selbsttätig gegenüber dem Erntebetrieb langsamer anzutreiben, um Kraftstoff zu sparen. Das Verlangsamen des Einzugsförderers erfolgt gegenüber dem Verlangsamen des Erntevorsatzes zeitverzögert, um das gesamte aufgenommene Material noch mit derselben Geschwindigkeit in die Erntemaschine zu verbringen. Ein Anhalten oder gar Reversieren des Erntevorsatzes ist nicht vorgesehen.

Die WO 2012/166947 A1 beschreibt eine automatische Entstopfungsprozedur für einen Mähdrescher, bei welcher im Falle eines Reversierens der Erntegutbearbeitungseinheit des Mähdreschers zunächst alle Förderbänder des Bandschneidwerks angehalten werden. Wenn der Reversiervorgang der Erntegutbearbeitüngseinheit länger als eine bestimmte Zeit dauert, wird auch der mittlere Bandförderer des Bandschneidwerks reversiert. Nach dem Beenden des Reversierens der Erntegutbearbeitungseinheit wird zunächst der mittlere Bandförderer wieder in der normalen Richtung angetrieben und nach dem Verstreichen einer vorbestimmten Zeit werden schließlich auch die äußeren Bandförderer in Gang gesetzt. Auch diese Vorgehensweise kann das beschriebene Problem nicht lösen.

### Problem

Die der Erfindung zu Grunde liegende Aufgabe wird darin gesehen, einen Mähdrescher mit Bandschneidwerk und einer gegenüber dem Stand der Technik verbesserten Anordnung zur Steuerung des Betriebs eines Bandschneidwerks bereitzustellen, welche einerseits bedienerfreundlich ist und andererseits die Verluste beim Ausheben vermeidet oder vermindert.

### Lösung

Die vorliegende Erfindung wird durch die Patentansprüche definiert.

Ein Mähdrescher ist mit einem Bandschneidwerk und einer Anordnung zur Steuerung des Betriebs des Bandschneidwerks versehen, welches mit einem mittleren Bandförderer und zwei äußeren Bandförderern ausgestattet und an einem mittels eines Aktors höhensteuerbaren und aushebbaren Schrägförderer des Mähdreschers angebracht ist. Die Anordnung zur Steuerung des Betriebs des Bandschneidwerks umfasst eine Steuereinheit, die betreibbar ist, einen Antrieb des mittleren Bandförderers im Falle eines Aushebens des Schrägförderers anzuhalten oder in einen Reversierbetrieb zu verbringen.

Mit anderen Worten wird vorgeschlagen, ein Anhalten oder ein Reversieren des mittleren Bandförderers automatisch mit dem Ausheben des Schrägförderers zu koppeln. Auf diese Weise vermeidet man die ansonsten auftretenden Erntegutverluste durch das unterhalb des mittleren Bandförderers angesammelte Erntegut beim Ausheben, denn es bleibt nach dem Anhalten an der Unterseite des mittleren Bandförderers oder es wird durch den reversierenden mittleren Bandförderer nach hinten in den Schrägförderer und von diesem in den Mähdrescher verbracht. Ein Eingreifen des Bedieners ist nicht erforderlich.

Der Aktor des Schrägförderers ist insbesondere betreibbar, den Schrägförderer aus einer Arbeitsposition in eine Vorgewendeposition auszuheben, wobei die Steuereinheit auf das Ausheben in die Vorgewendeposition mit dem Anhalten oder Reversiervorgang des mittleren Bandförderers reagieren kann. Bei einer anderen Ausführungsform erfolgt das Anhalten oder der Reversiervorgang des mittleren Bandförderers bereits auf ein Anheben des Schrägförderers auf eine (unterhalb einer Vorgewendeposition liegenden) Höhe hin, die aber derart hoch liegt, dass davon ausgegangen werden kann, dass kein Erntegut mehr aufgenommen werden soll.

Die Steuereinheit kann betreibbar sein, den Antrieb abhängig von einem insbesondere manuell eingegebenen Verstellbefehl an den Aktor undloder abhängig von einer mittels eines Sensors erfassten Position des Schrägförderers undloder abhängig von einer Ausgabe eines Vorgewendemanagements anzusteuern. Das Vorgewendemanagement kann in an sich bekannter Weise, auf Bedienereingabe oder eine automatische Erkennung der relativen Position des Mähdreschers gegenüber dem Vorgewende, z.B. anhand einer abgespeicherten Karte und eines satellitenbasierten Positionsbestimmungssystems oder mit einer elektrooptischen Einrichtung, die das Vorgewende optisch (z.B. mit einer Kamera oder einem Laserentfernungsmesser erkennt), eine Vorgewendesequenz durchführen, bei der verschiedene Aktoren nacheinander selbsttätig angesteuert werden, um dem Bediener den Wendevorgang im Vorgewende zu erleichtern, ggf. einschließlich der Lenkung des Mähdreschers. Hierzu sei beispielhaft auf die Offenbarung der EP 1 380 202 A1 verwiesen, die durch Verweis mit in die vorliegenden Unterlagen aufgenommen wird. Das Vorgewendemanagement gibt demnach an einer geeigneten Stelle des Feldes einen Verstellbefehl an den Aktor des Schrägförderers, um letzteren auszuheben, und in zeitlichem oder örtlichem Kontext mit diesem Verstellbefehl eine Anweisung an die Steuereinheit, welche diese veranlasst, den Antrieb des mittleren Bandförderers anzuhalten oder zu reversieren. Das Vorgewendemanagement kann Bestandteil der Steuereinrichtung sein oder umgekehrt.

Die äußeren Bandförderer sind mit jeweils einem Antrieb versehen sein, der sie im Erntebetrieb in Richtung auf den mittleren Bandförderer zu in Bewegung versetzt, während der Antrieb des mittleren Bandförderers den mittleren Bandförderer im Erntebetrieb nach hinten in Richtung auf den Schrägförderer zu in Bewegung versetzt.

Die Steuereinheit ist betreibbar, den Antrieb des mittleren Bandförderers auf ein Ausheben des Schrägförderers hin nach einer ersten Zeitverzögerung, die ein Abfördern des sich noch auf den äußeren Bandförderern befindlichen Ernteguts in den Schrägförderer erlaubt, anzuhalten oder zu reversieren. Sie kann betreibbar sein, den Antrieb des mittleren Bandförderers anzuweisen, den Reversiervorgang des mittleren Bandförderers nach einer zweiten Zeitverzögerung zu beenden, die ein Abfördern von Erntegut erlaubt, das sich unterhalb des mittleren Bandförderers angesammelt hat.

Der Schrägförderer kann mit einem Antrieb verbunden sein, der betreibbar ist, nach einem Ausheben für zumindest eine Zeit in förderndem Betrieb zu verbleiben, die ausreicht, von den äußeren Bandförderern herangefördertes Erntegut in den Mähdrescher hinein zu fördern. Ein Abschalten des Schrägförderers im Vorgewende ist zwar denkbar, aber nicht notwendig.

Die Antriebe der äußeren Bandförderer können mit der Steuereinheit verbunden sein und die Steuereinheit betreibbar sein, die Antriebe der äußeren Bandförderer nach einem Ausheben des Schrägförderers für eine Zeitspanne, die ein Abfördern des auf den äußeren Bandförderern befindlichen Ernteguts auf den mittleren Bandförderer erlaubt, abzuschalten. Bei einer anderen Ausführungsform können die äußeren Bandförderer auch im Vorgewende in ihrem normalen Erntebetrieb bleiben.

Die Steuereinheit kann betreibbar sein, den Antrieb des mittleren Bandförderers im Falle eines Absenkens des Schrägförderers wieder in einen Erntebetrieb zu versetzen.

### Ausführungsbeispiel

In den Zeichnungen sind zwei nachfolgend näher beschriebene Ausführungsbeispiele der Erfindung dargestellt. Es zeigen:
Fig. 1 eine schematische Seitenansicht eines Mähdreschers mit einem am Schrägförderer angebrachten Bandschneidwerk,
Fig. 2 eine Draufsicht auf den vorderen Bereich des Mähdreschers der Figur 1 und das Bandschneidwerk,
Fig. 3 einen vertikalen Schnitt durch das Bandschneidwerk entlang der Linie 3-3 der Figur 2, und
Fig. 4 ein Flussdiagramm, nach dem die Steuereinheit des Mähdreschers arbeitet.

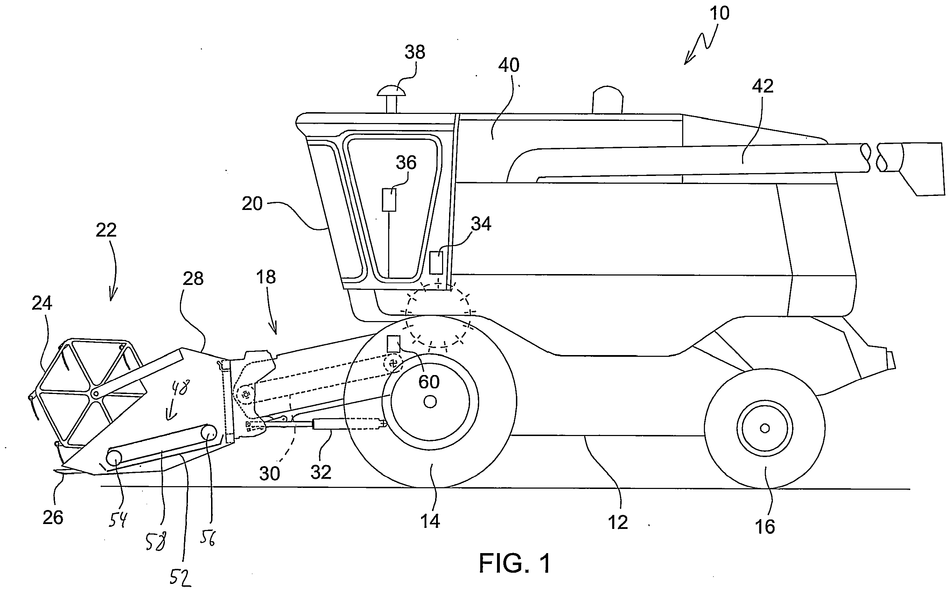

Die Figur 1 zeigt eine Seitenansicht eines Mähdreschers 10 in schematischer Darstellung. Der Mähdrescher 10 umfasst eine tragende Struktur 12, die sich auf angetriebenen, vorderen Rädern 14 und lenkbaren, rückwärtigen Rädern 16 auf dem Boden abstützt und über ein Feld bewegbar ist. Anstelle der Räder 14, 16 könnten auch Raupenlaufwerke treten.

An der Vorderseite der tragenden Struktur 12 ist ein Schrägförderer 18 angebracht, an dessen Vorderseite wiederum ein Bandschneidwerk 22 abnehmbar befestigt ist, welches eine Haspel 24, einen Mähbalken 26 und einen tragenden Rahmen 28 umfasst.

Eine Kabine 20 ist an der tragenden Struktur 12 oberhalb der vorderen Räder 14 angebracht. Der Schrägförderer 18 umfasst einen Förderer 30 und ist durch einen Aktor 32 gegenüber der tragenden Struktur 12 des Mähdreschers 10 um eine horizontal und quer zur Vorwärtsrichtung verlaufende Achse, die üblicherweise mit der Drehachse der oberen Umlenkwalze des Förderers 30 zusammenfällt, schwenkbar, um die Höhe des Bandschneidwerks 22 (oder eines beliebigen anderen, anstelle des Bandschneidwerks 22 am Schrägförderer 18 angebrachten Erntevorsatzes) über dem Boden zur Anpassung der Arbeitshöhe des Bandschneidwerks 22 verändern und letzteres am Feldende (im Vorgewende) ausheben zu können. Dazu ist der Aktor 32 mit einer Steuereinheit 34 verbunden, die ihrerseits mit einer Bedienerschnittstelle 36 und einer Positionsbestimmungseinrichtung 38 gekoppelt ist.

Im Inneren der tragenden Struktur sind in an sich bekannter Weise eine Dresch- und Trenneinrichtung und eine Reinigungseinrichtung angeordnet. Das gereinigte Korn wird in einem Korntank 40 zwischengespeichert und kann über einen Entladeförderer 42 auf ein Transportfahrzeug überladen werden.

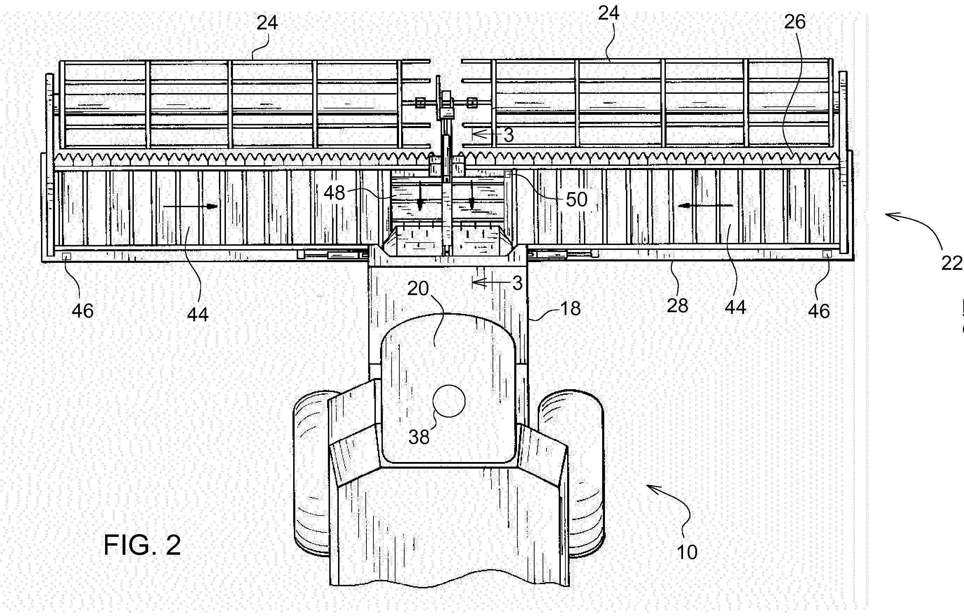

Es wird nun auf die Figur 2 verwiesen, in welcher der vordere Bereich des Mähdreschers 10 und das Bandschneidwerk 22 in einer Draufsicht gezeigt werden. Das Bandschneidwerk 22 umfasst zwei äußere Bandförderer 44, die jeweils mit einem Antrieb 46 verbunden sind, der sie im Erntebetrieb derart antreibt, dass ihre Oberseiten sich nach innen bewegen, wie durch die Pfeile gezeigt, um das von der Haspel 24 erfasste und vom Mähbalken 26 abgeschnittene Erntegut zur Mitte des Bandschneidwerks 22 zu fördern, wo es durch einen mittleren Bandförderer 48, der durch einen ihm zugeordneten Antrieb 50 angetrieben wird, übernommen und nach hinten in den Schrägförderer 18 abtransportiert wird.

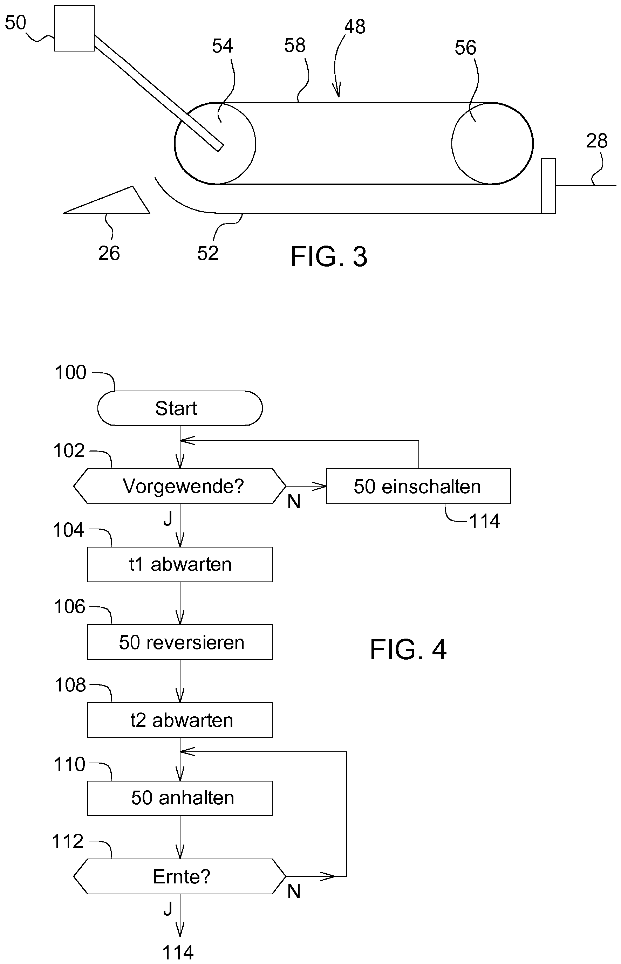

Anhand der Figur 3, die einen vertikalen Schnitt durch den mittleren Bandförderer 48 entlang der Vorwärtsrichtung des Mähdreschers 10. Der mittlere Bandförderer 48 umfasst einen Fördergurt 58, der um zwei Umlenkwalzen 54, 56, von denen eine mit dem Antrieb 50 gekoppelt ist, umläuft. Anstelle der vorderen Umlenkwalze 54 könnte der Antrieb 50 auch die hintere Umlenkwalze 56 antreiben. Unterhalb des unteren, rücklaufenden Trums des Fördergurts 58 ist eine Wanne 52 angeordnet, in welcher sich im Erntebetrieb Erntegut ansammelt, von dem durch den mittleren Bandförderer 48 kontinuierlich gewisse Mengen nach vorn abgegeben, jedoch durch das einlaufende Erntegut wieder nach hinten mitgenommen werden und somit nicht verloren gehen. Diese Mengen an Erntegut können jedoch auf das Feld fallen, wenn im Vorgewende oder Bestandslücken kein oder nur sehr wenig Erntegut von vorn einläuft.

Die (z.B. als Elektro- oder Hydro-Antriebe oder reversierbare und abschaltbare mechanische Antriebe ausgeführten) Antriebe 46 und 50 sind mit der Steuereinheit 34 verbunden, die im Erntebetrieb nach dem Flussdiagramm der Figur 4 arbeitet. Nach dem Start im Schritt 100 wird abgefragt, ob sich der Mähdrescher 10 in einem Vorgewendemodus befindet, bei dem das Bandschneidwerk 22 aus einer abgesenkten Ernteposition in eine angehobene Vorgewendeposition verbracht wurde (oder aus anderen Gründen angehoben wurde, z.B. um Aufnahme von Unkraut zu vermeiden). Hierzu kann die Position des Mähdreschers 10 anhand der Signale der satellitenbasieren Positionsbestimmungseinrichtung 38 und einer vor dem Erntevorgang oder während des Erntevorgangs abgespeicherten Karte des Felds erfasst werden, oder es wird anhand der Eingaben in die Bedienerschnittstelle 36 erkannt, ob der Bediener ein Ausheben des Bandschneidwerks 22 über den Aktor 32 veranlasst hat, oder es wird die Position des Aktors 32 oder eines von ihm bewegten Elements mit einem geeigneten Sensor 60 detektiert, oder die Steuereinheit 34 erhält von einem selbsttätigen Vorgewendemanagement, das am Vorgewende selbsttätig eine Vorgewendesequenz des Mähdreschers 10 veranlasst, eine entsprechende Information. Falls das Bandschneidwerk 22 nicht in einem Vorgewendemodus ist, folgt der Schritt 114, in dem der Antrieb 50 des mittleren Bandförderers 48 eingeschaltet ist. Beim Erntebetrieb sind auch die Antriebe 46 der äußeren Bandförderer 44, der Förderer 30 des Schrägförderers 18 und die Dresch- und Trenneinrichtung sowie die Reinigungseinrichtung des Mähdreschers 10 im Betrieb. Im Vorgewende können sie eingeschaltet bleiben oder nach entsprechenden (ggf. unterschiedlichen) Zeiten, die dazu hinreichen, das gesamte, vor dem Beginn des Vorgewendebetriebs vom Bandschneidwerk 22 aufgenommene Erntegut (und jenes, das im Schritt 106 herangefördert wird) im Mähdrescher 10 zu verarbeiten, abgeschaltet oder verlangsamt angetrieben werden. Auf den Schritt 114 folgt wieder der Schritt 102.

Falls der Schritt 102 ergeben hat, dass der Mähdrescher 10 im Vorgewendemodus ist, folgt der Schritt 104, in dem eine Zeit t1 abgewartet wird und während welcher der Antrieb 50 den Bandförderer 50 mit der bisherigen Geschwindigkeit antreibt, was analog auch für die Antriebe 46 gilt, welche die äußeren Bandförderer 44 mit der beim Erntebetrieb verwendeten Geschwindigkeit antreiben, und für den Antrieb des Schrägförderers 18. Diese Zeit t1 ist derart gewählt, dass das gesamte, vor dem Beginn des Vorgewendebetriebs vom Bandschneidwerk 22 aufgenommene Erntegut (das auf dem mittleren Bandförderer 48 und den äußeren Bandförderern 44 liegt) durch den mittleren Bandförderer 48 in den Schrägförderer 18 abgegeben wird und kein frisch aufgenommenes Erntegut mehr auf den Bandförderern 44, 48 liegt. Nach dem Schritt 104 veranlasst die Steuereinheit 34 den Antrieb 50, zu reversieren, d.h. die Walze 54 mit gegenüber dem Erntebetrieb gegensinniger Richtung anzutreiben. Dadurch wird das Erntegut, das sich in der Wanne 52 unterhalb des rücklaufenden Trums des Fördergurts 58 angesammelt hat, nach hinten abgefördert und vom weiterhin laufenden Schrägförderer 18 übernommen. Der Reversierbetrieb nach Schritt 106 wird gemäß Schritt 108 für eine Zeit t2 durchgeführt, die ausreicht, das Erntegut aus der Wanne 52 abzufördern.

Bei einer anderen Ausführungsform wäre es denkbar, dass die Steuereinheit 34 den Antrieb 50 im Schritt 106 anweist, den mittleren Bandförderer 48 lediglich anzuhalten. Auch damit verhindert man, dass das Erntegut, das sich unter dem mittleren Bandförderer 48 angesammelt hat, nach vorn abgegeben wird. Auch wäre es denkbar, den mittleren Bandförderer 48 im Schritt 106 zunächst für eine bestimmte Zeit anzuhalten und erst anschließend zu reversieren.

Im folgenden Schritt 110 wird der Antrieb 50 gestoppt und im Schritt 112 abgefragt, ob der Erntebetrieb wieder aufgenommen wurde. Ist das der Fall, folgt wieder der Schritt 114 (in dem auch die ggf. abgeschalteten Antriebe 46 und der Schrägförderer 18 und die Dresch- und Trenn- und Reinigungseinrichtung des Mähdreschers 10 wieder eingeschaltet werden) und ansonsten der Schritt 110.

## Patentansprüche

1. Mähdrescher (10) mit einem Bandschneidwerk (22), welches mit einem mittleren Bandförderer (48) und zwei äußeren Bandförderern (44) ausgestattet und an einem mittels eines Aktors (32) höhensteuerbaren und aushebbaren Schrägförderer (18) des Mähdreschers (10) angebracht ist, wobei eine Anordnung zur Steuerung des Betriebs des Bandschneidwerks (22) vorgesehen ist, welche eine Steuereinheit (34) umfasst, die konfiguriert ist, einen Antrieb (50) des mittleren Bandförderers (48) anzusteuern und wobei die äußeren Bandförderer (44) mit jeweils einem Antrieb (46) versehen sind, der konfiguriert ist, die äußeren Bandförderer (44) im Erntebetrieb in Richtung auf den mittleren Bandförderer (48) zu in Bewegung zu versetzen und wobei der Antrieb (50) des mittleren Bandförderers (48) konfiguriert ist, den mittleren Bandförderer (48) im Erntebetrieb nach hinten in Richtung auf den Schrägförderer (18) zu in Bewegung zu versetzen, **dadurch gekennzeichnet, dass** die Steuereinheit (34) konfiguriert ist, automatisch im Falle eines Aushebens des Schrägförderers (18) nach einer ersten Zeitverzögerung (t1), die ein Abfördern des auf den äußeren Bandförderern (44) befindlichen Ernteguts in den Schrägförderer (18) erlaubt, den Antrieb (50) des mittleren Bandförderers (48) anzuhalten oder in einen Reversierbetrieb zu verbringen.

2. Mähdrescher (10) nach Anspruch 1, wobei der Aktor (32) konfiguriert ist, den Schrägförderer (18) aus einer Arbeitsposition in eine Vorgewendeposition auszuheben und die Steuereinheit (34) konfiguriert ist, im Falle eines Aushebens des Schrägförderers (18) in eine Vorgewendeposition den Antrieb (50) des mittleren Bandförderers (48) anzuhalten und/oder in einen Reversiermodus zu verbringen.

3. Mähdrescher nach Anspruch 1 oder 2, wobei die Steuereinheit (34) konfiguriert ist, den Antrieb (50) abhängig von einem manuell gegebenen Verstellbefehl an den Aktor (32) und/oder abhängig von einer mittels eines Sensors (60) erfassten Position des Schrägförderers (18) undloder abhängig von einer Ausgabe eines Vorgewendemanagements anzusteuern.

4. Mähdrescher (10) nach einem der Ansprüche 1 bis 3, wobei die Steuereinheit (34) konfiguriert ist, den Antrieb (50) des mittleren Bandförderers (48) anzuweisen, den Reversiervorgang des mittleren Bandförderers (48) nach einer zweiten Zeitverzögerung (t2) zu beenden, die ein Abfördern von Erntegut erlaubt, das sich unterhalb des mittleren Bandförderers (48) angesammelt hat.

5. Mähdrescher (10) nach einem der Ansprüche 1 bis 4, wobei der Schrägförderer (18) mit einem Antrieb verbunden ist, der konfiguriert ist, nach einem Ausheben für zumindest eine Zeit in förderndem Betrieb zu verbleiben, die ausreicht, von den äußeren Bandförderern (44) herangefördertes Erntegut in den Mähdrescher (10) hinein zu fördern.

6. Mähdrescher (10) nach einem der Ansprüche 1 bis 5, wobei die Antriebe (46) der äußeren Bandförderer (44) mit der Steuereinheit (34) verbunden sind und die Steuereinheit (34) konfiguriert ist, die Antriebe (46) der äußeren Bandförderer (44) nach einem Ausheben des Schrägförderers (18) für eine Zeitspanne, die ein Abfördern des auf den äußeren Bandförderern (44) befindlichen Ernteguts auf den mittleren Bandförderer (48) erlaubt, abzuschalten.

7. Mähdrescher (10) nach einem der vorhergehenden Ansprüche, wobei die Steuereinheit (34) konfiguriert ist, den Antrieb (50) des mittleren Bandförderers (48) im Falle eines Absenkens des Schrägförderers (18) in einen Erntebetrieb zu versetzen.

## Claims

1. Combine harvester (10) having a draper belt header (22) which is provided with a central belt conveyor (48) and two outer belt conveyors (44) and is attached to a feeder house (18) of the combine harvester (10) which is height-controllable and can be raised by means of an actuator (32), wherein an arrangement for controlling the operation of the draper belt header (22) is provided which comprises a control unit (34) which is configured to actuate a drive (50) of the central belt conveyor (48), and wherein the outer belt conveyors (44) are each provided with a drive (46) which is configured to cause the outer belt conveyors (44) to move in the direction towards the central belt conveyor (48) in harvesting mode, and wherein the drive (50) of the central belt conveyor (48) is configured to cause the central belt conveyor (48) to move rearwards in the direction towards the feeder house (18) in harvesting mode, **characterized in that** the control unit (34) is configured, after a first time delay (t1), which allows the harvested crop located on the outer belt conveyors (44) to be discharged into the feeder house (18), in the event of the feeder house (18) being raised, to automatically stop the drive (50) of the central belt conveyor (48) or move it into a reversing mode.

2. Combine harvester (10) according to Claim 1, wherein the actuator (32) is configured to raise the feeder house (18) out of a working position into a headland position and the control unit (34) is configured to stop the drive (50) of the central belt conveyor (48) and/or to move it into a reversing mode in the event of the feeder house (18) being raised into a headland position.

3. Combine harvester according to Claim 1 or 2, wherein the control unit (34) is configured to actuate the drive (50) in dependence on an adjustment command given manually to the actuator (32) and/or in dependence on a position of the feeder house (18) detected by means of a sensor (60) and/or in dependence on an output of a headland management system.

4. Combine harvester (10) according to one of Claims 1 to 3, wherein the control unit (34) is configured, after a second time delay (t2), which allows harvested crop which has accumulated below the central belt conveyor (48) to be discharged, to instruct the drive (50) of the central belt conveyor (48) to terminate the reversing operation of the central belt conveyor (48).

5. Combine harvester (10) according to one of Claims 1 to 4, wherein the feeder house (18) is connected to a drive which is configured to remain in conveying mode after a raising for at least a time which suffices to convey harvested crop conveyed by the outer belt conveyors (44) into the combine harvester (10).

6. Combine harvester (10) according to one of Claims 1 to 5, wherein the drives (46) of the outer belt conveyors (44) are connected to the control unit (34) and the control unit (34) is configured to shut down the drives (46) of the outer belt conveyors (44) after a raising of the feeder house (18) for a time period which allows the harvested crop located on the outer belt conveyors (44) to be discharged onto the central belt conveyor (48).

7. Combine harvester (10) according to one of the preceding claims, wherein the control unit (34) is configured to cause the drive (50) of the central belt conveyor (48) to move into a harvesting mode in the event of a lowering of the feeder house (18).

## Revendications

1. Moissonneuse-batteuse (10) avec un mécanisme de coupe à bande (22) qui est équipé d'un convoyeur à bande central (48) et de deux convoyeurs à bande extérieurs (44) et qui est monté sur un convoyeur incliné (18) de la moissonneuse-batteuse (10) pouvant être commandé en hauteur et soulevé au moyen d'un actionneur (32), il étant prévu un agencement pour commander le fonctionnement du mécanisme de coupe à bande (22), lequel comprend une unité de commande (34) qui est configurée pour commander un entraînement (50) du convoyeur à bande central (48), et les convoyeurs à bande extérieurs (44) étant munis chacun d'un entraînement (46) qui est configuré pour déplacer les convoyeurs à bande extérieurs (44) en direction du convoyeur à bande central (48) en mode de récolte, et l'entraînement (50) du convoyeur à bande central (48) étant configuré pour déplacer le convoyeur à bande central (48) vers l'arrière en direction du convoyeur incliné (18) en mode de récolte, **caractérisé en ce que** l'unité de commande (34) est configurée pour arrêter automatiquement l'entraînement (50) du convoyeur à bande central (48) ou pour le faire passer dans un mode d'inversion dans le cas d'un soulèvement du convoyeur incliné (18) après un premier délai (t1) qui permet d'évacuer le produit récolté se trouvant sur les convoyeurs à bande extérieurs (44) dans le convoyeur incliné (18).

2. Moissonneuse-batteuse (10) selon la revendication 1, dans laquelle l'actionneur (32) est configuré pour soulever le convoyeur incliné (18) d'une position de travail à une position de tournière et l'unité de commande (34) est configurée pour arrêter l'entraînement (50) du convoyeur à bande central (48) et/ou pour le faire passer dans un mode d'inversion dans le cas d'un soulèvement du convoyeur incliné (18) dans une position de tournière.

3. Moissonneuse-batteuse selon la revendication 1 ou 2, dans laquelle l'unité de commande (34) est configurée pour commander l'entraînement (50) en fonction d'un ordre de réglage donné manuellement à l'actionneur (32) et/ou en fonction d'une position du convoyeur incliné (18) détectée au moyen d'un capteur (60) et/ou en fonction d'une sortie d'une gestion de tournière.

4. Moissonneuse-batteuse (10) selon l'une quelconque des revendications 1 à 3, dans laquelle l'unité de commande (34) est configurée pour ordonner à l'entraînement (50) du convoyeur à bande central (48) d'arrêter l'opération d'inversion du convoyeur à bande central (48) après un deuxième délai (t2) qui permet d'évacuer le produit récolté qui s'est accumulé sous le convoyeur à bande central (48).

5. Moissonneuse-batteuse (10) selon l'une quelconque des revendications 1 à 4, dans laquelle le convoyeur incliné (18) est relié à un entraînement qui est configuré pour rester en fonctionnement de convoyage après un soulèvement pendant au moins une durée suffisante pour convoyer le produit récolté amené par les convoyeurs à bande extérieurs (44) dans la moissonneuse-batteuse (10).

6. Moissonneuse-batteuse (10) selon l'une quelconque des revendications 1 à 5, dans laquelle les entraînements (46) des convoyeurs à bande extérieurs (44) sont reliés à l'unité de commande (34) et l'unité de commande (34) est configurée pour désactiver les entraînements (46) des convoyeurs à bande extérieurs (44) après un soulèvement du convoyeur incliné (18) pendant une durée qui permet d'évacuer le produit récolté se trouvant sur les convoyeurs à bande extérieurs (44) sur le convoyeur à bande central (48).

7. Moissonneuse-batteuse (10) selon l'une quelconque des revendications précédentes, dans laquelle l'unité de commande (34) est configurée pour placer l'entraînement (50) du convoyeur à bande central (48) dans un mode de récolte en cas d'abaissement du convoyeur incliné (18).
